(19) Europäisches Patentamt
European Patent Office
Office européen des brevets

(11) **EP 3 147 488 B1**

(12) **EUROPEAN PATENT SPECIFICATION**

(45) Date of publication and mention
of the grant of the patent:
**05.12.2018 Bulletin 2018/49**

(21) Application number: **15796099.8**

(22) Date of filing: **12.05.2015**

(51) Int Cl.:
*F02D 45/00* (2006.01)     *F02D 43/00* (2006.01)
*F02M 26/05* (2016.01)     *F02M 26/06* (2016.01)
*F02D 41/00* (2006.01)     *F02D 41/14* (2006.01)

(86) International application number:
**PCT/JP2015/063657**

(87) International publication number:
**WO 2015/178255 (26.11.2015 Gazette 2015/47)**

(54) **INTERNAL-COMBUSTION-ENGINE CONTROL DEVICE**

VERBRENNUNGSMOTORSTEUERUNGSVORRICHTUNG

DISPOSITIF DE COMMANDE DE MOTEUR À COMBUSTION INTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.05.2014 JP 2014107458**

(43) Date of publication of application:
**29.03.2017 Bulletin 2017/13**

(73) Proprietor: **TOYOTA JIDOSHA KABUSHIKI
KAISHA**
**Toyota-shi, Aichi-ken 471-8571 (JP)**

(72) Inventor: **NAKADA, Hayato**
**Toyota-shi**
**Aichi 471-8571 (JP)**

(74) Representative: **J A Kemp**
**14 South Square**
**Gray's Inn**
**London WC1R 5JJ (GB)**

(56) References cited:
**EP-A1- 1 399 784      EP-A1- 2 570 875
WO-A1-2014/033858    JP-A- 2010 221 864
JP-A- 2013 228 859    JP-A- 2014 047 757
JP-A- 2014 074 987    US-A1- 2014 114 485**

**Description**

Field

The present invention relates to a control device for an internal combustion engine.

Background

A common control device for an internal combustion engine is configured so that, when a target value relating to a controlled variable of the internal combustion engine is applied, the control device determines a control input of the internal combustion engine by feedback control so that an output value of the relevant controlled variable is caused to track the target value. However, in actual control of an internal combustion engine, there are many cases in which a variety of constraints with respect to the machinery or control exist in relation to state quantities of the internal combustion engine. If those constraints are not satisfied there is a risk that the machinery will be damaged or the control performance will deteriorate. Similarly to the trackability of the output value with respect to the target value, the satisfiability of constraints is one of the important types of performance required with respect to control of an internal combustion engine.

A reference governor is one effective means for satisfying the aforementioned requirement. A reference governor is equipped with a prediction model in which a closed loop system (feedback control system) that includes the internal combustion engine that is the control object and a feedback controller are modeled. In a case where a controlled variable is controlled according to a certain target value, the reference governor uses the prediction model to predict a future value of a state quantity of the internal combustion engine. The reference governor then modifies the target value of the controlled variable of the internal combustion engine based on the predicted state quantity and a constraint imposed thereon.

The inventor of the present application has already disclosed, in PTL 1 which is described hereunder, prior art technology in which a reference governor is applied to an internal combustion engine. According to the prior art technology disclosed in PTL 1, the aforementioned controlled variable and a turbocharging pressure as a state quantity are predicted, a target value of the controlled variable within a range that satisfies a constraint imposed on the predicted turbocharging pressure is searched for, and a controlled variable of vanes of an exhaust turbine is modified.

US 2014/114485 A1 discloses background information.

Citation List

Patent Literature

[PTL 1] JP 2013-79637 A

Technical Problem

In this connection, when calculating future predicted values of a plurality of controlled variables relating to an internal combustion engine using a reference governor, a plurality of target values corresponding to the controlled variables are modified based on constraints imposed on the respective predicted values. Here, a case will be considered of predicting a future value of a turbocharging pressure and an EGR rate as the controlled variables. For example, because the turbocharging pressure and the EGR rate are subjected to coordinated control during turbocharging pressure control, when predicting future values for the turbocharging pressure and the EGR rate, the dimensions of the prediction model increase. Consequently, the amount of calculation required to perform prediction increases, and there is a possibility that it may not be possible to finish calculations within a prescribed prediction interval. Further, because the turbocharging pressure and EGR rate form a stiff system in which there is a large difference between their respective response speeds, calculation of future values is prone to become minute and the computational load is liable to be large.

Summary of the Invention

According to an aspect of the invention, there is provided a control device for an internal combustion engine as set out in claim 1.

Advantageous Effects of Embodiments of the Invention

According to the control device of embodiments of the present invention, future predicted values of a plurality of state quantities of the internal combustion engine are calculated in a preset order, and while calculating a future predicted value of any one state quantity among the plurality of state quantities, future predicted values of the remaining state quantities are regarded as constant values, and therefore a computational load can be reduced in a case of calculating, by means of a reference governor, future predicted values of a plurality of controlled variables that are subjected to coordinated control.

Brief Description of Drawings

Fig. 1 is a view illustrating the configuration of an engine system to which a control device according to an embodiment of the present invention is applied.
Fig. 2 is a view illustrating a target value tracking control structure of a diesel engine having the control device according to the present embodiment.
Fig. 3 is a view illustrating a feed-forward structure obtained by equivalently deforming the target value tracking control structure shown in Fig. 2.
Fig. 4 is a view illustrating a prediction image of the modified target values g for the EGR rate and the turbocharging pressure in the present embodiment.
Figure 5 is a view for explaining various modifications to which the target value tracking control structure illustrated in Fig. 2 can be applied.
Fig. 6 is a view illustrating prediction patterns of the modified target values g for each of the turbocharging pressure, the HPL-EGR amount and the LPL-EGR amount.

Description of Embodiments

Hereunder, an embodiment of the present invention will be described with reference to the accompanying drawings.

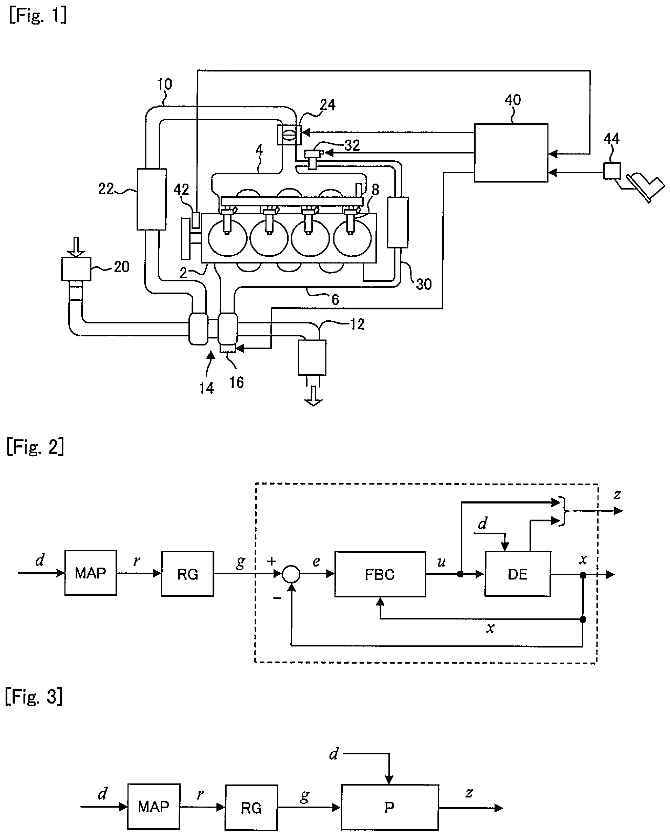

Fig. 1 is a view illustrating the configuration of an engine system to which a control device according to an embodiment of the present invention is applied. An internal combustion engine provided in this engine system is a diesel engine with a turbocharger. Four cylinders are arranged in-line in a main body 2 of the diesel engine, and an injector 8 is provided in each cylinder. An intake manifold 4 and an exhaust manifold 6 are installed in the engine main body 2.
An intake passage 10 through which fresh air that is drawn in from an air cleaner 20 flows is connected to the intake manifold 4. A compressor of a turbocharger 14 is installed in the intake passage 10. An intercooler 22 is installed downstream of the compressor, and a diesel throttle 24 is provided downstream of the intercooler 22. An exhaust passage 12 for releasing exhaust gas from the engine main body 2 into the atmosphere is connected to the exhaust manifold 6. A turbine of the turbocharger 14 is installed in the exhaust passage 12. The turbocharger 14 is of a variable displacement type, in which a variable nozzle 16 is provided in the turbine.
The present engine system is equipped with an EGR apparatus that recirculates exhaust gas from the exhaust system to the intake system. The EGR apparatus is connected by an EGR passage 30 to a position on the downstream side of the diesel throttle 24 in the intake passage 10 and to the exhaust manifold 6. An EGR valve 32 is provided in the EGR passage 30.
The present engine system is equipped with an ECU (electronic control unit) 40. The ECU 40 is a control device that performs overall control of the entire engine system, and includes at least a RAM (random-access memory), a ROM (read-only memory) and a CPU (microprocessor). The ECU 40 performs processing to take in signals of various sensors that the engine system includes. The sensors include an engine speed sensor 42 that detects the engine speed, and an accelerator opening degree sensor 44 that outputs a signal in accordance with an opening degree of an accelerator pedal. The ECU 40 processes the signals of the respective sensors that are taken in, and actuates respective actuators in accordance with a predetermined control program. The actuators that are actuated by the ECU 40 include the variable nozzle 16, the diesel throttle 24 and the EGR valve 32.
The engine control executed by the ECU 40 in the present embodiment includes turbocharging pressure control. According to the turbocharging pressure control, respective manipulated variables of the variable nozzle 16, the diesel throttle 24 and the EGR valve 32 which influence the turbocharging pressure are subjected to coordinated control. In the turbocharging pressure control, control inputs (manipulated variables) of the diesel engine are the variable nozzle opening degree, the EGR valve opening degree and the diesel throttle opening degree, and control outputs (state quantities) of the diesel engine are the turbocharging pressure and the EGR rate.
There are constraints with respect to machinery or control on the control inputs and control outputs of the diesel engine. In the present embodiment, an upper limit value and a lower limit value as constraints with respect to the machinery or the control are set for both the turbocharging pressure and the EGR rate. Therefore, in the present embodiment, the control inputs of the diesel engine are determined so as to cause the turbocharging pressure and the EGR rate to track the respective target values thereof, while maintaining the control outputs of the diesel engine at or above the respective lower limit values and at or below the respective upper limit values thereof. Fig. 2 is a view illustrating a target value tracking control structure of a diesel engine having the control device according to the present embodiment. Note that the target value tracking control structure shown in Fig. 2 is a configuration that is virtually realized by the CPU operating in accordance with a program stored in the ROM of the ECU 40. The target value tracking control structure includes a target value map (MAP), a reference governor (RG) and a feedback controller (FBC).

When the target value map receives input of an exogenous input d = [engine speed; fuel injection amount] indicating an operating condition of the diesel engine, the target value map outputs a target value r = [EGR rate target value; turbocharging pressure target value] of the controlled variable of the diesel engine.

Upon receiving input of the target value r = [EGR rate target value; turbocharging pressure target value] of the controlled variable, the reference governor modifies the target value r of the controlled variables so that constraints relating to an output value z = [EGR rate; turbocharging pressure] of the controlled variable of the diesel engine are satisfied, and outputs a modified target value g = [EGR rate modified target value; turbocharging pressure modified target value]. The reference governor is described in detail later.

Upon receiving input of the modified target value g from the reference governor, the feedback controller determines a control input u = [diesel throttle opening degree; EGR valve opening degree; variable nozzle opening degree] of the diesel engine by feedback control, so that each state quantity (state variable x = [EGR rate; turbocharging pressure]) of the diesel engine approaches the modified target value g. The technical specifications of the feedback controller are not limited, and a known feedback controller can be used.

Fig. 3 is a view illustrating a feed-forward structure obtained by equivalently deforming the target value tracking control structure shown in Fig. 2. The closed loop system surrounded by a dashed line in Fig. 2 is taken as a single model (P) in the feed-forward structure shown in Fig. 3, on the basis that the closed loop system has already been designed. A model of the closed loop system is expressed by the following model equation (1). In equation (1), f and h denote functions of the model equation. Further, k denotes a discrete time step.

[Equation 1]

$$P\begin{cases} x(k+1) = f(x(k), g(k), d(k)) \\ z(k) = h(x(k), g(k), d(k)) \end{cases} \quad \cdots (1)$$

The reference governor prepares a plurality of candidates for the modified target value g based on the received target value r. Specifically, search points are arranged in a lattice shape on a two-dimensional plane that takes the turbocharging pressure and the EGR rate as axes, and the respective search points are set as candidates $(g_1, g_2, ..., g_{Ng})$ for the modified target value g. $N_g$ denotes the number of candidates for the modified target value g. The reference governor inputs each of the plurality of candidates for the modified target value g into a closed-loop system model, and predicts future values of the turbocharging pressure and the EGR rate. Since the prediction model that the reference governor uses is represented by equation (1), future values of the state variable x and the output value z of the controlled variable are represented by the following equation (2).

[Equation 2]

$$x(i+1 \mid k) = f(x(i \mid k), g(k), d(k))$$
$$z(i \mid k) = h(x(i \mid k), g(k), d(k)) \quad \cdots (2)$$
$$i = 1, 2, ..., N_h$$

The values x(i|k) and z(i|k) shown in equation (2) are predicted values of a future state quantity and control output at a time that is i steps in the future which are estimated based on information at a time k. Further, $N_h$ that is shown in equation (2) denotes the number of prediction steps (prediction horizon). A value obtained by multiplying a time interval of a discrete time step by the number of prediction steps is a prediction length (prediction interval) from the present to the future. Further, in this case, it is assumed that a value d(k) of an exogenous input at the time k continues during the prediction interval.

The reference governor calculates a future value z(i|k) of the output value z of the controlled variable over the prediction interval, and for each of the modified target value g candidates, the reference governor determines whether or not the future value z(i|k) conflicts with the constraints, that is, whether or not the future value z(i|k) exceeds the upper limit value or is less than the lower limit value. Subsequently, among the future values z(i|k) that are in a range of values that are greater than or equal to the lower limit value and less than or equal to the upper limit value, the reference governor selects the modified target value g candidate that is closest to the target value r as the final modified target value g.

As already described above, because the turbocharging pressure and the EGR rate are subjected to coordinated control during the turbocharging pressure control, the dimension (the number of state variables necessary in order to reproduce the behavior of the EGR rate and the turbocharging pressure) of the prediction model increase. Therefore, the amount of calculation required to perform the prediction increases, and there is a possibility that it may not be possible to finish calculations within a prescribed prediction interval (for example, 4ms or 8ms). Further, because the turbocharging pressure and EGR rate form a stiff system in which there is a large difference between the response speeds thereof, calculation of future values is prone to become minute and the computational load is liable to be large.

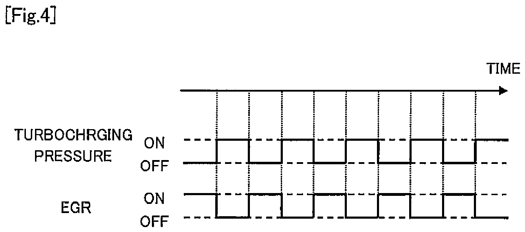

Therefore, in the present embodiment, respective modified target values g for the EGR rate and the turbocharging pressure are predicted by a method that is described hereunder. Fig. 4 is a view illustrating a prediction image of the modified target values g for the EGR rate and the turbocharging pressure in the present embodiment. As illustrated in Fig. 4, while calculation of one of the modified target values g is being performed by the reference governor, calculation of the other modified target value g is not performed, and calculation of the other modified target value g is started when the prediction interval for the one of the modified target values g ends. That is, the respective modified target values g for the EGR rate and the turbocharging pressure are alternately calculated. Note that, the order of this calculation is set in advance. Further, although in the example illustrated in Fig. 4 the respective prediction intervals are equal, a configuration can also be adopted in which the prediction intervals for the EGR rate and the turbocharging pressure are made to differ from each other.

In order to alternately calculate the modified target values g for the EGR rate and the turbocharging pressure, in the present embodiment the prediction equation of the state variable x shown in equation (2) is divided, and each element thereof is described as represented in the following equation (3). In equation (3), a state variable $x_1$ denotes the turbocharging pressure, and a state variable $x_2$ denotes the EGR rate. Further, functions $f_1$ and $f_2$ represent functions obtained by factoring the original function f.
[Equation 3]

$$x(i+1|k) = f(x(i|k), g(k), d(k))$$
$$\Leftrightarrow \begin{cases} x_1(i+1|k) = f_1(x_1(i|k), x_2(i|k), g(k), d(k)) \\ x_2(i+1|k) = f_2(x_1(i|k), x_2(i|k), g(k), d(k)) \end{cases} \quad \cdots (3)$$

In this case, when both the EGR rate and the turbocharging pressure are subjected to feedback control, a response time constant of the EGR rate becomes around ten times larger than that of the turbocharging pressure. That is, the response of the turbocharging pressure during feedback control is extremely slow in comparison to the response of the EGR rate. Therefore, in a prediction interval for the modified target value g of the EGR rate, the turbocharging pressure is regarded as being constant at a current value $x_1^*$. Note that the current value $x_1^*$ is a value of the turbo charging pressure at the initial step of the relevant prediction interval. Hence, $x_1(i|k)$ of equation (3) is equal to $x_1(i+1|k)$ = $x_1^*$, and calculation of the future value of the state variable $x_1$, that is, the turbocharging pressure, can be omitted. That is, in the prediction interval for the modified target value g of the EGR rate, a future predicted trajectory of only the EGR rate is calculated by a model represented by the following equation (4), and whether or not the future value $z(i|k)$ of the EGR rate conflicts with the constraints is determined.
[Equation 4]

$$x_2(i+1|k) = f_2(x_1^*, x_2(i|k), g(k), d(k)) \quad \cdots (4)$$

On the other hand, the response of the EGR rate during feedback control is extremely fast compared to the turbocharging pressure. Therefore, in a prediction interval for the modified target value g of the turbocharging pressure, the EGR rate is regarded as being changed in a step shape in the first step of the prediction interval to become a target value $r_2^*$ and being constant at the target value $r_2^*$ thereafter. Note that, the target value $r_2^*$ is a target value of the EGR rate that is output from the target value map at the start of the relevant prediction interval. Hence, $x_2(i|k)$ of equation (3) is equal to $x_2(i+1|k)$ = $r_2^*$, and calculation of the future value of the state variable $x_2$, that is, the EGR rate, can be omitted. That is, in the prediction interval for the modified target value g of the turbocharging pressure, a future predicted trajectory of only the turbocharging pressure is calculated by a model represented by the following equation (5), and whether or not the future value $z(i|k)$ of the turbocharging pressure conflicts with the constraints is determined.
[Equation 5]

$$x_1(i+1 \mid k) = f_1(x_1(i \mid k), r_2^*, g(k), d(k)) \qquad \cdots(5)$$

Thus, according to the present embodiment, when predicting the respective modified target values g for the EGR rate and the turbocharging pressure using the reference governor, while one of the state quantities is being predicted the other of the state quantities is regarded as a constant value, and the state quantities are alternately calculated in this way. Hence, a problem that arises when predicting the modified target values g for two controlled variables, namely, the EGR rate and the turbocharging pressure can be prevented from occurring. Further, it also is possible to reduce the computational load involved in predicting the modified target values g. In addition, since calculation of the modified target value g for the EGR rate and calculation of the modified target value g for the turbocharging pressure can be separated, an advantageous effect such that parallel implementation of calculations is facilitated can also be expected.

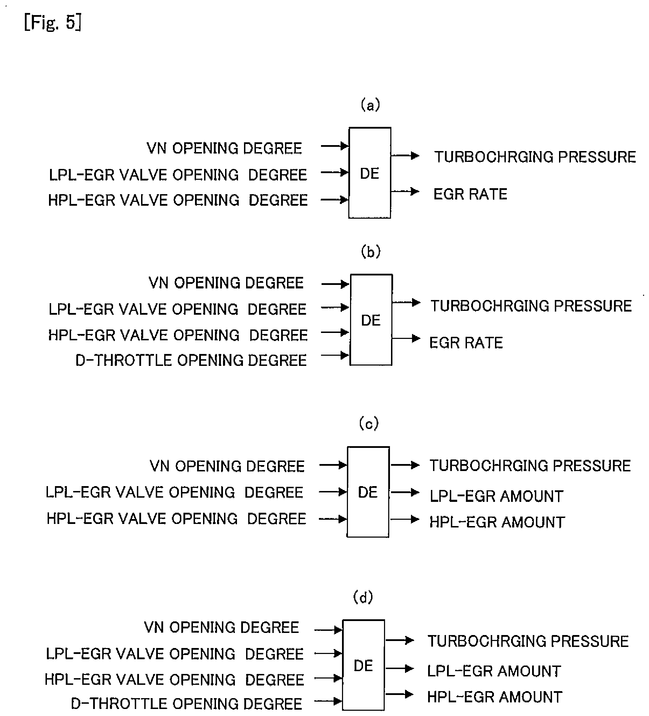

Note that the present invention is not limited to the above described embodiment. For example, in the target value tracking control structure illustrated in Fig. 2, in a case where the diesel engine (DE) has a low-pressure loop EGR (LPL-EGR) system and a high-pressure loop (HPL-EGR) EGR system, the target value tracking control structure can also be applied to combinations of control inputs and control outputs as shown in (a) to (d) in Fig. 5. In (a) and (b) in Fig. 5, in addition to a variable nozzle opening degree (VN opening degree) and a diesel throttle opening degree (D-throttle opening degree), an EGR valve opening degree of a low-pressure EGR system (LPL-EGR valve opening degree) and an EGR valve opening degree of a high-pressure EGR system (HPL-EGR valve opening degree) are included in the control inputs. In (c) and (d) in Fig. 5, instead of the EGR rate, an EGR amount of the low-pressure EGR system (LPL-EGR amount) and an EGR amount of the high-pressure EGR system (HPL-EGR amount) are included in the control outputs.

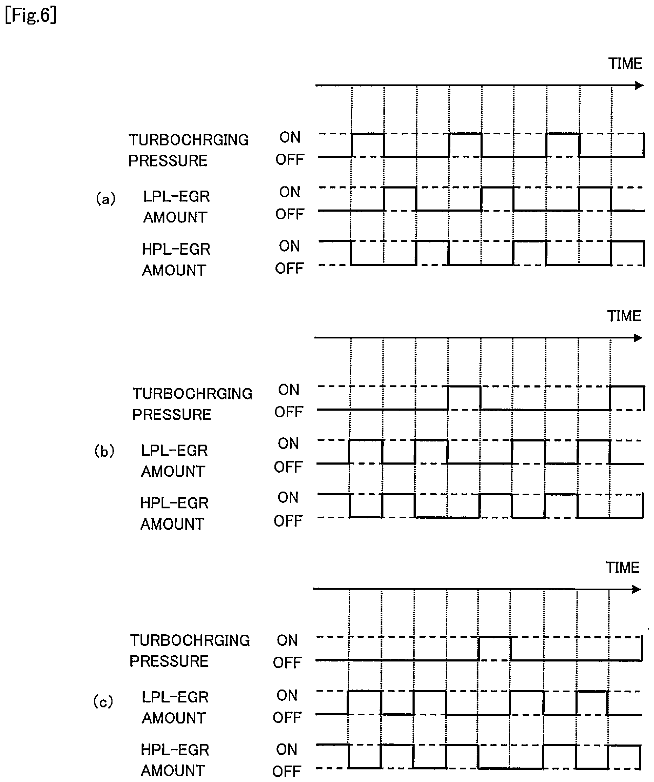

Note that, when applying the present invention to the three-output system illustrated in (c) or (d) of Fig. 5, the modified target value g of each controlled variable can be calculated, for example, in the following manner. Fig. 6 is a view illustrating prediction patterns of the modified target values g for each of the turbocharging pressure, the HPL-EGR amount and the LPL-EGR amount. Fig. 6(a) illustrates a case where the respective modified target values g of the turbocharging pressure, the HPL-EGR amount and the LPL-EGR amount are calculated one at a time in sequential order. Fig. 6(b) illustrates a case where calculation of the HPL-EGR amount and the LPL-EGR amount is performed twice in succession, respectively, in an alternating manner, and calculation of the turbocharging pressure is performed once after each time the HPL-EGR amount and the LPL-EGR amount have been calculated twice, respectively, in an alternating manner. Further, Fig. 6(c) illustrates a case where the HPL-EGR amount is calculated with the highest frequency, and the turbocharging pressure is calculated with the lowest frequency. However, with respect to each of the prediction patterns, during an interval in which the modified target value g of a certain specific controlled variable is being calculated, calculation of the modified target values g of the remaining controlled variables is not performed, and after the prediction interval of the modified target value g of the relevant specific controlled variable ends, calculation of the modified target value g of a controlled variable that is different from the specific controlled variable is started. Note that, in each of the cases illustrated in Figs. 6(a) to (c), the calculation order is set in advance.

The prediction pattern illustrated in Fig. 6(b) or (c) is based on the magnitude relationship between time constants in the feedback control. That is, in the feedback control, the time constant for the turbocharging pressure is the smallest, the time constant for the LPL-EGR amount is next largest, and the time constant for the HPL-EGR amount is the largest. Therefore, in comparison to the case of the prediction pattern in Fig. 6(a), by adopting the prediction pattern in Fig. 6(b) or (c), there is an effect that a decrease in the prediction accuracy of a controlled variable for which the time constant is relatively large can be suppressed.

Further, in the prediction intervals for the modified target value g of the turbocharging pressure illustrated in Fig. 6, both of the LPL-EGR amount and the HPL-EGR amount change in a step shape in the initial step of the relevant prediction interval to become the respective target values thereof, and thereafter are regarded as being constant at the respective target values thereof. Further, in the prediction interval for the HPL-EGR amount, the turbocharging pressure and the LPL-EGR amount are both regarded as being constant at the respective current values thereof. Furthermore, in the prediction interval of the LPL-EGR amount, the turbocharging pressure is regarded as being constant at the current value thereof, and the HPL-EGR amount changes in a step shape in the initial step of the relevant prediction interval to become the target value thereof, and thereafter is regarded as being constant at the relevant target value.

In addition, an internal combustion engine to which the control device according to the present invention is applied is not limited to a diesel engine, and the present invention can also be applied to a gasoline engine.

Description of Reference Numerals

2 engine main body

16

variable nozzle 24 diesel throttle

32 EGR valve

40 ECU

**Claims**

1. A control device for an internal combustion engine comprising:

   a feedback controller (40) that is configured to determine a control input of an internal combustion engine (10) by feedback control so as to cause output values of a plurality of controlled variables relating to the internal combustion engine (10) to approach target values that correspond to the output values, respectively; and
   a reference governor (40) that is configured to:

   prepare a plurality of candidates for a modified target value;
   predict future values of a plurality of state quantities of the internal combustion engine (10) for the plurality of candidates for the modified target value using a closed-loop system model that includes the internal combustion engine (10) and the feedback controller;
   determine whether or not each of the future values conflicts with the constraints imposed on each of the plurality of state quantities; and
   select, in dependence on the determination of whether or not each of the future values conflicts with the constraints imposed on each of the plurality of state quantities, a modified target value that is applied to the feedback controller so that the constraints imposed on each of the plurality of state quantities are satisfied;

   **characterized in that** the plurality of controlled variables are an EGR rate and a turbocharging pressure; and
   the reference governor (40) is also configured to predict the future values of the EGR rate and the turbocharging pressure in a preset order;
   in a prediction interval for the future value of the EGR rate, regard the turbocharging pressure as a constant at the start of the prediction interval for the future value of the EGR rate; and
   in a prediction interval for the future value of the turbocharging pressure, regard the EGR rate as a target value of the EGR rate that is applied to the feedback controller at the start of the prediction interval for the future value of the turbocharging pressure.

2. The control device for an internal combustion engine according to claim 1,
   wherein the EGR rate includes a high-pressure EGR rate and a low-pressure EGR rate; and
   the reference governor (40) is also configured to:

   in a prediction interval for the future value of the high-pressure EGR rate, regard both the low-pressure EGR rate and the turbocharging pressure as a constant at the start of the prediction interval for the future value of the EGR rate;
   in a prediction interval for the future value of the turbocharging pressure, regard both the high-pressure EGR rates and the low-pressure EGR rate as a target value of these EGR rates that are applied to the feedback controller at the start of the prediction interval for the future value of the turbocharging pressure, respectively; and
   in a prediction interval for the future value of the low-pressure EGR rate, regard the high-pressure EGR rate as a target value of the high-pressure EGR rate that is applied to the feedback controller at the start of the prediction interval for the future value of the low-pressure EGR rate whereas regard the turbocharging pressure as a constant at the start of the prediction interval for the future value of the low-pressure EGR rate.

**Patentansprüche**

1. Steuervorrichtung für einen Verbrennungsmotor, umfassend:

eine Rückkopplungssteuerung (40), die konfiguriert ist, einen Steuereingang eines Verbrennungsmotors (10) durch Rückkopplungskontrolle zu bestimmen, um Ausgangsventile einer Vielzahl von gesteuerten Variablen im Zusammenhang mit dem Verbrennungsmotor (10) dazu zu veranlassen, sich Zielwerten zu nähern, die jeweils den Ausgangsventilen entsprechen; und

einen Referenzregler (40), der zu Folgendem konfiguriert ist:

Vorbereiten einer Vielzahl von Kandidaten für einen modifizierten Zielwert;

Vorhersagen von zukünftigen Werten einer Vielzahl von Zustandsgrößen des Verbrennungsmotors (10) für die Vielzahl von Kandidaten für die modifizierten Zielwerte unter Verwendung eines geschlossenen Schleifensystemmodells, das den Verbrennungsmotor (10) und die Rückkopplungssteuerung beinhaltet;

Bestimmen, ob jeder der zukünftigen Werte mit den Beschränkungen, die jeder der Vielzahl von Zustandsgrößen auferlegt sind, in Konflikt ist oder nicht; und

Auswählen in Abhängigkeit von der Bestimmung, ob jeder der zukünftigen Werte mit den Beschränkungen, die jeder der Vielzahl von Zustandsgrößen auferlegt sind, in Konflikt ist oder nicht, eines modifizierten Zielwerts, der auf die Rückkopplungssteuerung angewendet wird, sodass die Beschränkungen, die jeder der Vielzahl von Zustandsgrößen auferlegt sind, eingehalten sind;

**dadurch gekennzeichnet, dass** die Vielzahl von gesteuerten Variablen eine AGR-Rate und ein Turboladedruck sind; und

der Referenzregler (40) außerdem konfiguriert ist, die zukünftigen Werte der AGR-Rate und des Turboladedrucks in einer voreingestellten Reihenfolge vorherzusagen;

in einem Vorhersageintervall für den zukünftigen Wert der AGR-Rate Betrachten des Turboladedrucks als eine Konstante am Anfang des Vorhersageintervalls für den zukünftigen Wert der AGR-Rate; und

in einem Vorhersageintervall für den zukünftigen Wert des Turboladedrucks Betrachten der AGR-Rate als einen Zielwert der AGR-Rate, die auf die Rückkopplungssteuerung am Anfang des Vorhersageintervalls für den zukünftigen Wert des Turboladedrucks angewendet wird.

2. Steuervorrichtung für einen Verbrennungsmotor nach Anspruch 1,
wobei die AGR-Rate eine Hochdruck-AGR-Rate und eine Niederdruck-AGR-Rate beinhaltet; und
der Referenzregler (40) außerdem zu Folgendem konfiguriert ist:

in einem Vorhersageintervall für den zukünftigen Wert der Hochdruck-AGR-Rate Betrachten sowohl der Niederdruck-AGR-Rate als auch des Turboladedrucks als eine Konstante am Anfang des Vorhersageintervalls für den zukünftigen Wert der AGR-Rate;

in einem Vorhersageintervall für den zukünftigen Wert des Turboladedrucks Betrachten sowohl der Hochdruck-AGR-Raten als auch der Niederdruck-AGR-Rate als einen Zielwert dieser AGR-Raten, die jeweils auf die Rückkopplungssteuerung am Anfang des Vorhersageintervalls für den zukünftigen Wert des Turboladedrucks angewendet werden; und

in einem Vorhersageintervall für den zukünftigen Wert der Niederdruck-AGR-Rate Betrachten der Hochdruck-AGR-Rate als einen Zielwert der Hochdruck-AGR-Rate, die auf die Rückkopplungssteuerung am Anfang des Vorhersageintervalls für den zukünftigen Wert der Niederdruck-AGR-Rate angewendet wird, wohingegen Betrachten des Turboladedrucks als eine Konstante am Anfang des Vorhersageintervalls für den zukünftigen Wert der Niederdruck-AGR-Rate.

**Revendications**

1. Dispositif de commande pour un moteur à combustion interne comprenant :

un dispositif de commande de rétroaction (40) qui est conçu pour déterminer une entrée de commande d'un moteur à combustion interne (10) par une commande de rétroaction de manière à amener des valeurs de sortie d'une pluralité de variables commandées par rapport au moteur à combustion interne (10) à s'approcher de valeurs cibles qui correspondent aux valeurs de sortie, respectivement ; et
un régulateur de référence (40) qui est conçu pour :

préparer une pluralité de candidats pour une valeur cible modifiée ;
prédire des valeurs futures d'une pluralité de grandeurs d'état du moteur à combustion interne (10) pour la pluralité de candidats pour la valeur cible modifiée à l'aide d'un modèle de système à boucle fermée qui comprend le moteur à combustion interne (10) et le dispositif de commande de rétroaction ;

déterminer si chacune des valeurs futures est contraire ou non aux contraintes imposées sur chacune de la pluralité de grandeurs d'état ; et

sélectionner, en fonction de la détermination de savoir si chacune des valeurs futures est contraire ou non aux contraintes imposées sur chacune de la pluralité de grandeurs d'état, une valeur cible modifiée qui est appliquée au dispositif de commande de rétroaction de manière que les contraintes imposées sur chacune de la pluralité de grandeurs d'état sont satisfaites ;

**caractérisé en ce que** la pluralité de variables commandées représentent un taux d'EGR et une pression de turbocompression ; et

le régulateur de référence (40) est également conçu pour prédire les valeurs futures du taux d'EGR et la pression de turbocompression dans un ordre prédéfini ;

dans un intervalle de prédiction pour la valeur future du taux d'EGR, considérer la pression de turbocompression comme une constante au début de l'intervalle de prédiction pour la valeur future du taux d'EGR ; et

dans un intervalle de prédiction pour la valeur future de la pression de turbocompression, considérer le taux d'EGR comme valeur cible du taux d'EGR qui est appliqué au dispositif de commande de rétroaction au début de l'intervalle de prédiction pour la valeur future de la pression de turbocompression.

2. Dispositif de commande pour un moteur à combustion interne selon la revendication 1,

dans lequel le taux d'EGR comprend un taux d'EGR haute pression et un taux d'EGR basse pression ; et

le régulateur de référence (40) est également conçu pour :

dans un intervalle de prédiction pour la valeur future du taux d'EGR haute pression, considérer à la fois le taux d'EGR basse pression et la pression de turbocompression comme une constante au début de l'intervalle de prédiction pour la valeur future du taux d'EGR ;

dans un intervalle de prédiction pour la valeur future de la pression de turbocompression, considérer à la fois les taux d'EGR haute pression et le taux d'EGR basse pression comme valeur cible de ces taux d'EGR qui sont appliqués au dispositif de commande de rétroaction au début de l'intervalle de prédiction pour la valeur future de la pression de turbocompression, respectivement ; et

dans un intervalle de prédiction pour la valeur future du taux d'EGR basse pression, considérer le taux d'EGR haute pression comme valeur cible du taux d'EGR haute pression qui est appliqué au dispositif de commande de rétroaction au début de l'intervalle de prédiction pour la valeur future du taux d'EGR basse pression tout en considérant la pression de turbocompression comme valeur constante au début de l'intervalle de prédiction pour la valeur future du taux d'EGR basse pression.

[Fig. 1]

[Fig. 2]

[Fig. 3]

[Fig.4]

[Fig. 5]

(a)

VN OPENING DEGREE →
LPL-EGR VALVE OPENING DEGREE → | DE | → TURBOCHRGING PRESSURE
HPL-EGR VALVE OPENING DEGREE → → EGR RATE

(b)

VN OPENING DEGREE →
LPL-EGR VALVE OPENING DEGREE →
HPL-EGR VALVE OPENING DEGREE → | DE | → TURBOCHRGING PRESSURE
D-THROTTLE OPENING DEGREE → → EGR RATE

(c)

VN OPENING DEGREE → → TURBOCHRGING PRESSURE
LPL-EGR VALVE OPENING DEGREE → | DE | → LPL-EGR AMOUNT
HPL-EGR VALVE OPENING DEGREE → → HPL-EGR AMOUNT

(d)

VN OPENING DEGREE →
LPL-EGR VALVE OPENING DEGREE → → TURBOCHRGING PRESSURE
HPL-EGR VALVE OPENING DEGREE → | DE | → LPL-EGR AMOUNT
D-THROTTLE OPENING DEGREE → → HPL-EGR AMOUNT

[Fig.6]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014114485 A1

- JP 2013079637 A